# EUROPÄISCHE PATENTSCHRIFT

(11) **EP 0 452 804 B1**
(45) Veröffentlichungstag und Bekanntmachung des Hinweises auf die Patenterteilung: **30.08.1995**
(21) Anmeldenummer: 91105741.2
(22) Anmeldetag: 11.04.1991
(51) Int. Cl.: B60N 2/26

(54) **Kindersicherheitssitz für Kraftfahrzeuge**
Child's safety seat for motor vehicles
Siège de sécurité pour enfant pour véhicules automobiles

(30) Priorität: 18.04.1990 DE 9004399 U
(43) Veröffentlichungstag der Anmeldung: 23.10.1991
(73) Patentinhaber: Schräder, Margarete, D-95352 Marktleugast (DE)
(72) Erfinder: Schräder, Margarete, D-95352 Marktleugast (DE)
(74) Vertreter: Wilcken, Thomas, Dipl.-Ing.

(56) Entgegenhaltungen:
- EP-A- 0 323 334
- DE-A- 3 505 009
- DE-U- 8 306 939
- FR-A- 2 602 409

## Beschreibung

Die Erfindung betrifft einen Kindersicherheitssitz für Kraftfahrzeuge gemäß dem Oberbegriff des Patentanspruchs 1.

Ein derartiger Kindersicherheitssitz ist in der FR-A-2 602 409 beschrieben. Das Rahmengestell dieses Sitzes besitzt zwei oberste Querstreben, die in ihrer Mitte durch eine Klemmeinrichtung unter Bildung eines Klemmspaltes zur Einklemmung eines schrägverlaufenden Gurtstranges des fahrzeugeigenen Gurtsystems zusammengehalten werden. Die Klemmeinrichtung selbst besteht aus einem Gewindebolzen, der zwei fluchtende Bohrungen in den Querstreben durchdringt, und einem Drehhebel mit einem Gewindeloch. Durch Verdrehen des Hebels wird der Gurtstrang zwischen den Querstreben eingeklemmt. Weil die Klemmeinrichtung an dem Rahmengestell ungünstig plaziert ist, befindet sie sich zu nahe an der oberen Anlenkungsstelle des Fahrzeuges für den schrägen Gurtstrang. Infolgedessen und weil der Gurtstrang zudem hauptsächlich nicht im Bereich der Klemmeinrichtung trotz deren mittiger Anordnung an den Querstreben geklemmt wird, ergibt sich eine außermittige Einklemmung des Gurtstranges zwischen den Querstreben des Rahmengestelles. Daraus kann im Belastungsfalle, d. h. bei Fahrzeugsabbremsung, ein nach vorne gerichtetes Herauswinden des Sicherheitssitzes aus seiner Lage und damit eine Gefährdung des in dem Sitz befindlichen Kindes folgen.

Ein weiterer Sicherheitssitz ist aus dem DE-U-8 306 939 zu entnehmen, der durch Gurtbänder ohne zusätzliche Verschlußelemente schlupffrei und leicht lösbar in der gewünschten Lage festgelegt werden kann. Dazu sind an dem das Sitzelement tragenden Gestell Klemmeinrichtungen mit einem Klemmhebel vorgesehen, der das Durchziehen des Gurtes zum Spannen ermöglicht, den Gurt aber in Gegenzugrichtung blockiert.

In der DE-A-3 505 009 ist ein anderer Sicherheitssitz für Kinder beschrieben, der unter Zuhilfenahme des fahrzeugeigenen Diagonalgurtes festlegbar ist. Dazu sind neben Durchführungen für den Beckengurt an dem Gestell im Bereich der Lehne des Sitzelementes Klemmeinrichtungen vorgesehen, die einen handbetätigbaren Exzenter zum Festlegen des Sitzes an dem Diagonalgurt durch Klemmung aufweisen.

Nachteilig ist bei diesen beiden letztgenannten Systemen, daß die Gestelle ihre Position bei starker Verzögerung des Kraftfahrzeuges nicht sicher beibehalten. Dies rührt im Falle des erstgenannten Systems im wesentlichen daher, daß die Befestigung des Sitzes unterhalb des Schwerpunktes des besetzten Sitzes erfolgt, was eine erhebliche Nickbewegung desselben ermöglicht. Im Falle des anderen Systems ergibt sich aufgrund der einseitigen Rückhaltung im Lehnenbereich eine "Verwindung" des Sitzes.

Es ist die Aufgabe der Erfindung, einen Kindersicherheitssitz der einleitend angeführten Art so auszustatten, daß er mindestens mit dem fahrzeugeigenen Dreipunkt-Gurtsystem durch einfache Handhabung seiner Klemmeinrichtung und Schonung des Gurtsystems auf dem Fahrzeugsitz unverrückbar festlegbar ist.

Die Lösung dieser Aufgabe ist in dem Kennzeichnenden Teil des Patentanspruchs 1 angegeben.

Damit ist gewährleistet, daß der Sitz durch die in seiner vertikalen Symmetrieebene angreifende Rückhaltekraft des Schräggurtes verwindungsfrei zurückgehalten wird, wodurch die Bewegungsmöglichkeit des Sitzes im Beanspruchungsfalle vermindert oder stark herabgesetzt ist, das heißt, daß gefährliche Beschleunigungen oder Bewegungen des Sitzes sicher unterbunden werden. Die Klemmeinrichtung des Sicherheitssitzes kann besonders einfach gehandhabt werden, um den schrägverlaufenden Gurtstrang des fahrzeugeigenen Gurtsystems in richtiger Lage sicher festzulegen. Eine Schonung des schrägverlaufenden Gurtstranges bei sicherer Klemmung desselben ist auch durch die Begrenzung der an dem Gurtstrang wirksamen Flächenpressung erreicht, weil der Klemmbalken an seiner der Verbundstrebe zugekehrten Seite mit einer an deren Querschnittsform angepaßten Profilierung ausgeführt ist. Eine weitere Schonung des Gurtstranges kann dadurch erreicht werden, wenn der Klemmbalken aus einem Kunststoffteil besteht, das zwecks Erzielung der notwendigen Biegesteifigkeit mit einem Metallkern versehen sein kann.

Die Erfindung ist nachstehend anhand eines in den Zeichnungen dargestellten Ausführungsbeispieles näher erläutert.
Es zeigen:
- Figur 1: eine Seitenansicht des mit der erfindungsgemäßen Klemmeinrichtung ausgestatteten Sitzes,
- Figur 2: einen Ausschnitt aus dem das Sitzelement aufnehmenden Rahmengestell mit Blick auf eine mit der Klemmeinrichtung versehene Verbundstrebe im Bereich der Lehne des Sitzelementes,
- Figur 3: die Klemmeinrichtung nach Figur 2 im geöffnetem Zustand im Augenblick des Einlegens des Diagonalgurtes,

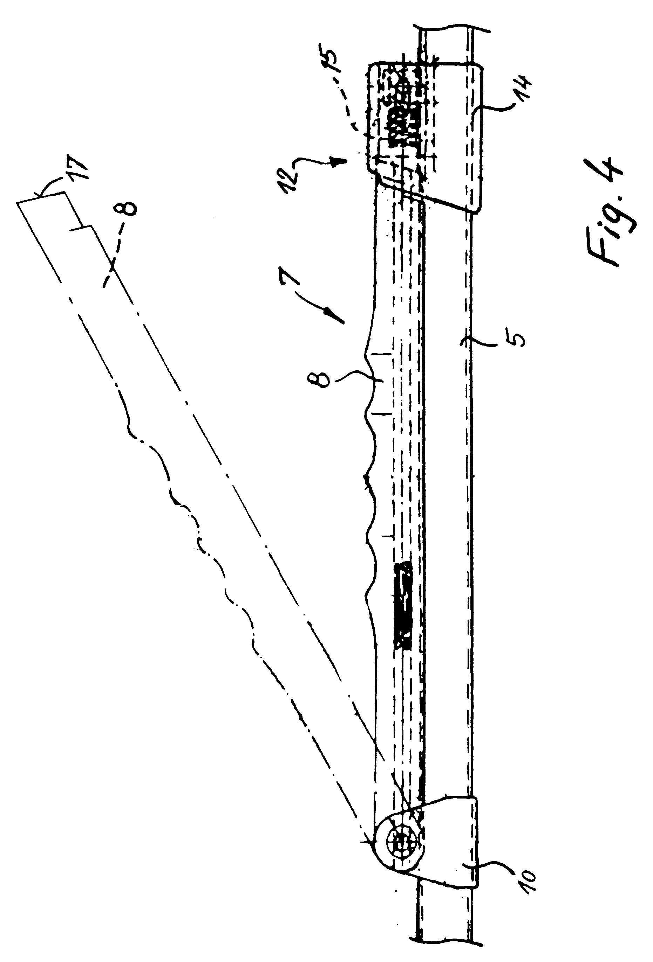

- Figur 4: eine Detaildarstellung der Klemmeinrichtung in Seitenansicht,
- Figuren 5, 6 und 7: in perspektivischer Teilansicht des Sitzes dessen Darstellung bei der Festlegung in der Anfangsphase, einer Zwischenphase und in der Endphase.

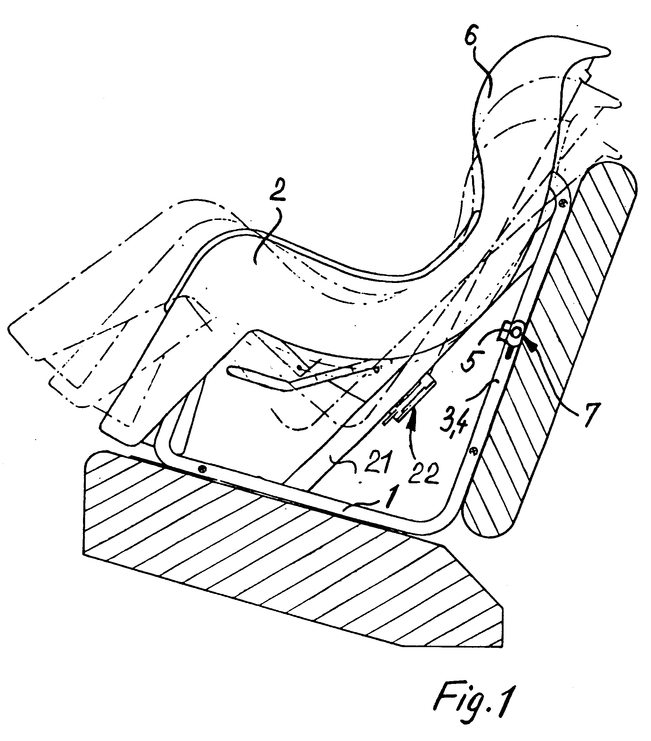

Entsprechend Figur 1 besteht der vorgeschlagene Sicherheitssitz im wesentlichen aus einem Rahmengestell 1 mit einem an diesem befestigten Sitzelement 2. Das Rahmengestell 1 ist vorzugsweise als Rohrrahmen ausgebildet und besteht aus zwei stützenden Seitenteilen 3 und 4, die durch eine Anzahl Verbundstreben 5 miteinander verbunden sind. Das Sitzelement 2 ist auf geeignete Weise höhen- und neigungsverstellbar in dem Rahmengestell 1 angeordnet.

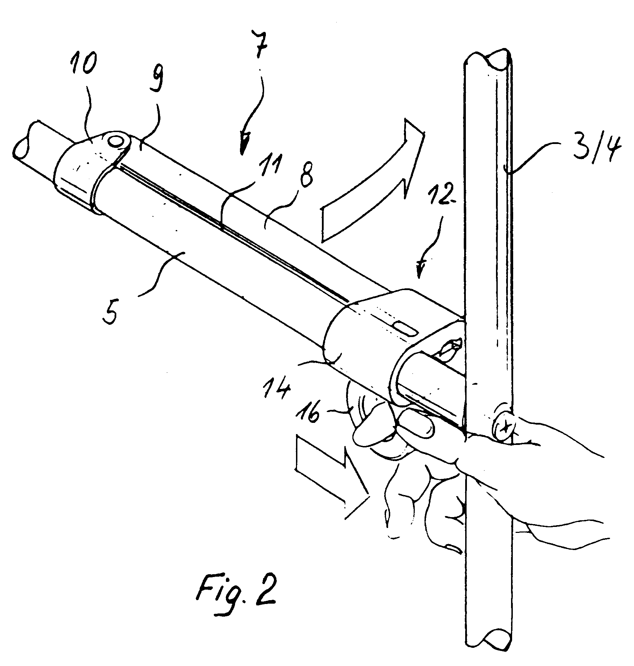

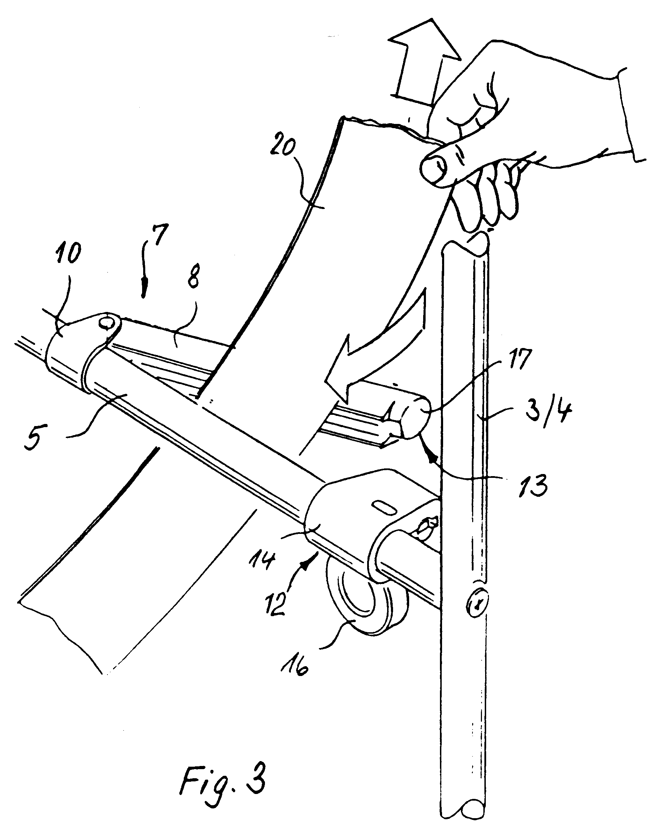

Eine der Streben 5 ist in Höhe des Mittenbereichs der Rückenlehne 6 des Sitzelementes 2 vorgesehen. Sie geht hinter dem Sitzelement 2 frei und ist gemäß Figur 2 mit einer Klemmeinrichtung 7 versehen. Diese besteht aus einem Klemmbalken 8, der, wie aus Figur 3 ersichtlich, an seinem einen Ende 9 an einer schellenartigen Halterung 10 schwenkbar gelagert ist. Die Halterung ist mit der Verbundstrebe 5 unlösbar verbunden. Der Klemmbalken kann mit einem metallischen Verstärkungskern versehen sein.

Der Klemmbalken 8 ist an seiner der Verbundstrebe 5 zugekehrten Seite in Anpassung an den Kreisquerschnitt derselben konkav ausgebildet und bildet in Anlagestellung an die Verbundstrebe 5 einen Klemmspalt 11. Die Anlagestellung wird durch ein Riegelelement 12 fixiert, das mit dem freien Ende 13 des Klemmbalkens 8 in Wirkverbindung tritt. Das Riegelelement 12 besteht aus einem Schloßteil 14, das gegen die Kraft einer Feder 15 über eine Weglänge verschiebbar ist, die einerseits ein ungehindertes Ausklappen des Klemmbalkens 8 und andererseits die Sicherung desselben ermöglicht. Dabei wird das Riegelelement 12 gegenüber der Verbundstrebe 5 drehsicher geführt. Die Länge der Klemmeinrichtung (7) kann ein Mehrfaches der Breite des mit ihr zu klemmenden Diagonalgurtes des fahrzeugeigenen Dreipunktgurtsystems betragen.

Zwecks Betätigung des Riegelelementes 12 ist dieses mit einer geeigneten Handhabe 16, vorzugsweise in Form einer Fingeröse, versehen. Um den Klemmbalken 8 auch bei unbetätigtem Riegelelement 12 in die Klemmstellung bringen zu können, ist die Stirnfläche 17 an dem freien Ende 13 des Klemmbalkens 8 abgeschrägt ausgeführt, derart, daß das Schloßteil 14 beim Verbringen des Klemmbalkens 8 in die Klemmstellung gegen die Feder 15 verdrängt wird, bis es sich bei Erreichen der Klemmstellung durch Expansion der Feder 15 über das freie Ende 13 des Klemmbalkens 8 schiebt und diesen fixiert.

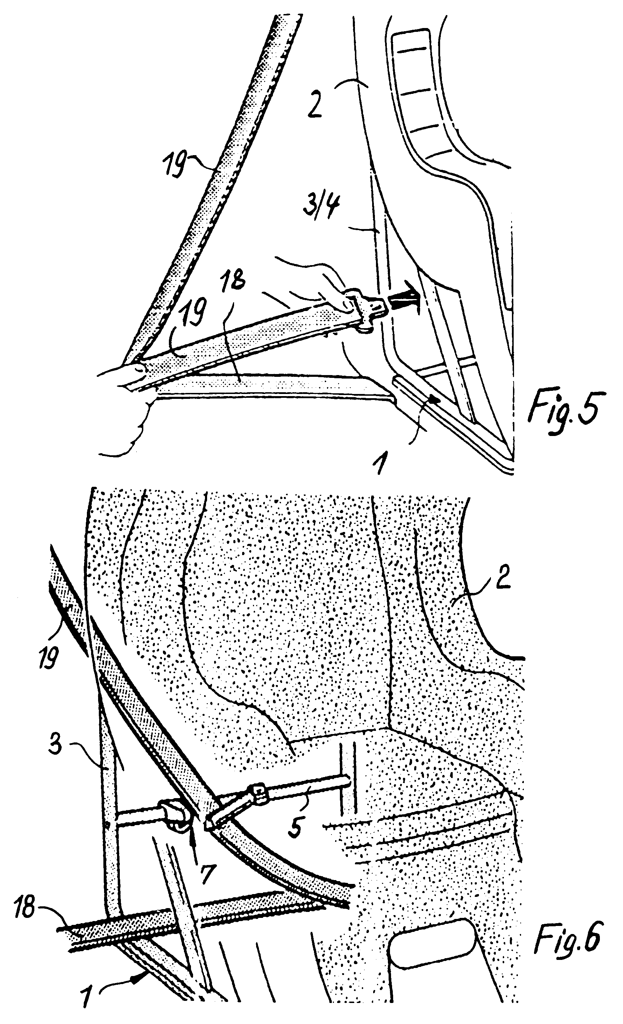

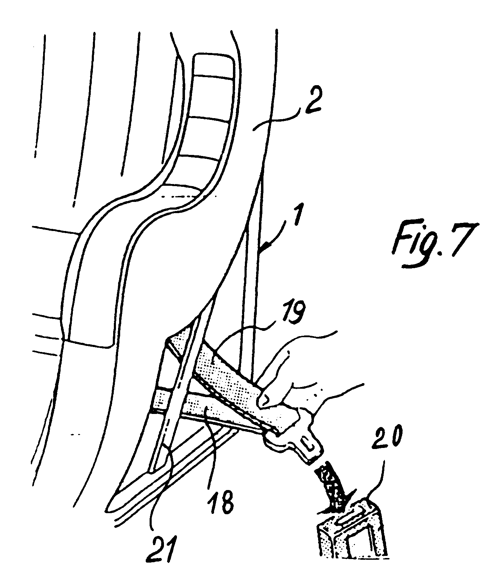

Zur Festlegung des Kindersitzes wird dieser auf dem Kraftfahrzeugsitz abgestellt und zur Anlage an der Rückenlehne desselben gebracht. Dann werden gemäß den Figuren 5, 6 und 7 die Gurtteile 18, 19 des fahrzeugeigenen Dreipunktgurtsystems im unteren Bereich des Rahmengestells 1 zwischen den aufragenden Streben der Seitenteile 3 und 4 und dem Sitzelement 2 hindurchgeführt und in einem Schloß 20 verriegelt (Figur 7). Anschließend wird die Klemmeinrichtung 7 durch Rückziehen des Schloßteiles 14 und Ausklappen des Klemmbalkens 8 geöffnet und der Diagonalgurt 19 eingelegt. Nachdem dieser durch Rückzug durch die Gurtsystem-Aufrollautomatik seine gestraffte Lage eingenommen hat, wird nun die Klemmeinrichtung 7 durch Einklappen des Klemmbalkens 8 in die Klemmstellung gebracht, in der dieser automatisch gegenüber dem Riegelelement 12 einrastet.

Der Diagonalgurt 19 ist damit in dem Klemmspalt 11 zwischen Klemmbalken 8 und Verbundstrebe 5 eingeklemmt und in der Lage, den Sitz gemeinsam mit dem Beckengurt 18 unverrückbar zu fixieren.

Ferner kann der dargestellte Kindersicherheitssitz zur wahlweisen Festlegung noch mit zusätzlichen Gurtklemmen für gesonderte Gurte ausgerüstet sein. Hierzu zeigt z.B. Figur 1, daß die Seitenteile 3,4 des Rahmengestells 1 mit schrägen Versteifungsstreben (21) versehen sind, an denen sich je eine zusätzliche Gurtklemme 22 befindet. Die beiden Gurtklemmen 22 können bekannter Bauart, aber auch gemäß der vorstehend beschriebenen Klemmeinrichtung 7 ausgebildet sein. Die in Verbindung mit den Klemmen 22 verwendeten, gesonderten und in an sich bekannter Weise am Fahrzeug befestigten Gurte (nicht gezeigt) bewirken eine zusätzliche Festlegung des Sicherheitssitzes. Alternativ werden sie verwendet, wenn das Fahrzeug hinten kein Diagonalgurtsystem aufweist oder wenn, wie schon angedeutet, der Sicherheitssitz zusätzlich festgelegt werden soll.

## Patentansprüche

1. Kindersicherheitssitz für Kraftfahrzeuge, umfassend ein Rahmengestell (1), das zwei durch Verbundstreben (5) miteinander verbundene Seitenteile (3,4) aufweist, und ein von dem Rahmengestell getragenes Sitzelement (2), wobei der Sicherheitssitz auf einem Sitz des Kraftfahrzeuges abstellbar und mittels des fahrzeugeigenen Gurtsystems (18,19) in seiner Position gehalten wird, wobei mindestens ein Diagonalgurt (19) des Gurtsystems an dem Rahmengestell (1) kraftschlüssig festlegbar ist und wobei mindestens an einer im mittigen Bereich der Rückenlehne (6) des Sitzelementes (2) vorgesehenen, an dem Rahmengestell angeordneten Verbundstrebe (5) eine Klemmeinrichtung (7) für den Diagonalgurt (19) vorgesehen ist, die sich zwischen den Seitenteilen (3,4) des Rahmengestells befindet, dadurch gekennzeichnet, daß die Klemmeinrichtung (7) einen Klemmbalken (8) umfaßt, der mit der Verbundstrebe (5) einen Klemmspalt (11) zur Aufnahme des Diagonalgurtes (19) bildet und an seiner der Verbundstrebe (5) zugekehrten Seite mit einer deren Querschnittsform angepaßter Profilierung ausgeführt ist, daß der Klemmbalken (8) an seinem einen Ende (9) an einer Halterung (10) schwenkbar gelagert ist und an seinem anderen Ende (13) mit einem lösbaren Riegelelement (12) in Wirkverbindung steht, daß als Riegelelement (12) ein den Klemmbalken (8) an seinem freien Ende übergreifendes Schloßteil (14) vorgesehen ist, welches auf der Verbundstrebe (5) im Sinne einer Vergrößerung des Abstandes zu der Halterung (10) gegen die Kraft einer Feder (15) verschiebbar angeordnet ist und daß das freie Ende des Klemmbalkens (8) mit einer abgeschrägten Stirnfläche (17) versehen ist, die während des Verbringens des Klemmbalkens (8) in Klemmstellung das Schloßteil (14) gegen die Feder (15) verdrängt, bis dieses bei Erreichen der Klemmstellung durch Expansion der Feder (15) in eine das Ende des Klemmbalkens (8) übergreifende Position gebracht wird.

2. Kindersicherheitssitz nach Anspruch 1, dadurch gekennzeichnet, daß der Klemmbalken (8) aus einem Kunststoffteil besteht, welches mit einem Metallkern versehen ist.

3. Kindersicherheitssitz nach Anspruch 1 oder 2, dadurch gekennzeichnet, daß die Länge der Klemmeinrichtung (7) ein Mehrfaches der Breite des Diagonalgurtes des fahrzeugeigenen Gurtsystems beträgt.

4. Kindersicherheitssitz nach einem der Ansprüche 1 bis 3, dadurch gekennzeichnet, daß die Seitenteile (3,4) des Rahmengestells (1) mit schrägen Versteifungsstreben (21) versehen sind und daß die Versteifungsstreben zusätzliche Gurtklemmen (22;7) für gesonderte Gurte des Kraftfahrzeuges aufweisen.

## Claims

1. Child safety seat for motor vehicles comprising a frame (1), which has two side parts (3, 4) connected to one another by means of connection struts (5), and a seat element (2) supported by the frame, wherein the safety seat can be placed on a seat of the motor vehicle and is retained in its position by means of the vehicle's own belt system (18, 19), wherein at least one diagonal belt (19) of the belt system can be non-positively attached to the frame (1) and wherein a clamping device (7) for the diagonal belt (19), which is situated between the side parts (3, 4) of the frame, is provided at least on one connection strut (5) arranged on the frame and provided in the central region of the back rest (6) of the seat element (2), characterised in that the clamping device (7) comprises a clamp crosspiece (8) which forms a clamping gap (11) with the connection strut (5) for receiving the diagonal belt (19) and is designed to be profiled to match the cross-sectional shape of the connection strut (5) at its side facing the latter, in that the clamp crosspiece (8) is pivotably supported on a mounting (10) at one end (9) and cooperates with a releasable locking element (12) at the other end (13), in that a lock part (14) overlapping the clamp crosspiece (8) at its free end is provided as the locking element (12), which lock part (14) is arranged to be displaceable against the force of a spring (15) on the connection strut (5) for the purpose of enlarging the distance from the mounting (10), and in that the free end of the clamp crosspiece (8) is provided with a bevelled end-face (17) which displaces the lock part (14) against the spring (15) when bringing the clamp crosspiece (8) into the clamping position, until it arrives at a position overlapping the end of the clamp crosspiece (8) on reaching the clamping position due to expansion of the spring (15).

2. Child safety seat according to claim 1, characterised in that the clamp crosspiece (8) consists of a plastic part which is provided with a metal core.

3. Child safety seat according to claim 1 or 2, characterised in that the length of the clamping device (7) is a multiple of the width of the diagonal belt of the vehicle's own belt system.

4. Child safety seat according to one of claims 1 to 3, characterised in that the side parts (3, 4) of the frame (1) are provided with inclined strengthening struts (21), and in that the strengthening struts have additional belt clamps (22, 7) for separate motor vehicle belts.

## Revendications

1. Siège de sécurité pour enfant pour véhicules automobiles, comprenant une ossature en forme de cadre (1), qui comporte deux parties latérales (3,4), reliées entre elles par des entretoises de liaison (5), et un élément formant siège (2) porté par l'ossature en forme de cadre, le siège de sécurité pouvant être placé sur un siège du véhicule automobile et étant maintenu en position au moyen du système de ceintures (18,19) propre au véhicule, et dans lequel au moins une sangle diagonale (19) du système de ceinture peut être fixée selon une liaison de force à l'ossature en forme de cadre (1), et au moins sur une entretoise de liaison (5), qui est prévue sur l'ossature en forme de cadre dans la zone médiane du dossier (6) de l'élément de siège (2), est prévu un dispositif de serrage (7) pour la sangle diagonale (19), qui est situé entre les parties latérales (3,4) de l'ossature en forme de cadre, caractérisé en ce que le dispositif de serrage (7) comprend une barre de serrage (8), qui définit, avec l'entretoise de liaison (5), une fente de serrage (11) servant à recevoir la sangle diagonale (19) et est réalisée, sur son côté tourné vers l'entretoise de liaison (5), avec un profil adapté à la forme en coupe transversale de l'entretoise, en ce que la barre de serrage (8) est montée, par l'une de ses extrémités (9), de manière à pouvoir pivoter sur un dispositif de retenue (10) et est reliée de façon active, par son autre extrémité (13), à un élément de verrouillage amovible (12), en ce qu'il est prévu en tant qu'élément de verrouillage (12), une partie de fermoir (14), qui s'engage par-dessus l'extrémité libre de la barre de serrage (8) et qui est disposée de manière à être déplaçable sur l'entretoise de liaison (5), à l'encontre de la force d'un ressort (15), dans le sens d'un accroissement de la distance par rapport au dispositif de retenue (10), et en ce que l'extrémité libre de la barre de serrage (8) est pourvue d'une surface frontale biseautée (17), qui pendant la venue de la barre de serrage (8) dans la position de serrage, repousse l'élément de fermoir (14) contre le ressort (15), jusqu'à ce que cette partie de fermoir soit amenée dans une position dans laquelle elle s'engage pardessus l'extrémité de la barre de serrage (8), par extension du ressort (15), lorsque la position de serrage est atteinte.

2. Siège de sécurité pour enfant selon la revendication 1, caractérisé en ce que la barre de serrage (8) est formée par une pièce en matière plastique, qui comporte un noyau métallique.

3. Siège de sécurité pour enfant selon la revendication 1 ou 2, caractérisé en ce que la longueur du dispositif de serrage (7) est égale à un multiple de la largeur de la sangle diagonale du système de ceinture propre au véhicule.

4. Ceinture de sécurité pour enfant selon l'une des revendications 1 à 3, caractérisé en ce que les parties latérales (3,4) de l'ossature en forme de cadre (1) comportent des entretoises obliques de rigidification (21) et en ce que les entretoises de rigidification possèdent des éléments supplémentaires de serrage de ceinture (22; 7) pour des ceintures particulières du véhicule automobile.
